# EUROPÄISCHE PATENTSCHRIFT

(11) **EP 2 195 191 B1**
(45) Veröffentlichungstag und Bekanntmachung des Hinweises auf die Patenterteilung: **25.09.2013**
(21) Anmeldenummer: 08785726.4
(22) Anmeldetag: 27.08.2008
(51) Int. Cl.: B60N 2/48

(54) **KOPFSTÜTZE FÜR EIN FAHRZEUG**
HEAD REST FOR A VEHICLE
APPUIE-TÊTE POUR VÉHICULE

(30) Priorität: 31.08.2007 DE 102007041496
(43) Veröffentlichungstag der Anmeldung: 16.06.2010
(73) Patentinhaber: Johnson Controls GmbH, 51399 Burscheid (DE)
(72) Erfinder: FRÖSE, Ernst-Otto, 42699 Solingen (DE); DILLINGER, Thomas, 42929 Wermelskirchen (DE); HASLER, Alexander, 40219 Düsseldorf (DE)
(74) Vertreter: Schwöbel, Thilo K.
(86) Internationale Anmeldenummer: PCT/EP2008/007028
(87) Internationale Veröffentlichungsnummer: WO 2009/030416

(56) Entgegenhaltungen:
- EP-A- 0 916 549
- DE-B3- 10 348 939
- DE-B3-102004 016 474
- DE-B3-102005 052 766
- DE-B3-102006 001 143
- DE-C1- 19 941 712

## Beschreibung

Die Erfindung betrifft eine Kopfstütze für einen Fahrzeugsitz, bei welcher zumindest ein dem Kopf des Sitzinsassen zugewandtes Teilstück der Kopfstütze unfallbedingt unter der Wirkung einer Antriebseinrichtung aus einer Gebrauchsstellung zum Kopf des Sitzinsassen hin in eine Sicherheitsstellung verlagerbar ist.

### Stand der Technik

Aus der Druckschrift DE 10 2004 016 474 B3 ist eine Kopfstütze bekannt, bei der Teilstücke der Kopfstütze teleskopartig auseinanderbewegt werden, um eine Sicherheitsstellung der Kopfstütze einzunehmen. Ferner ist aus der Druckschrift DE 103 48 939 B3 eine Kopfstütze für einen Fahrzeugsitz bekannt, bei der die Kopfstütze aus Komfortgründen gemäß eines Bewegungsablaufs verstellt wird und wobei ein anderer Bewegungsablauf durchgeführt wird, wenn die Kopfstütze im Falle eines Unfalls von ihrer Normalposition in eine Schutzposition überführt wird. Aus der Druckschrift DE 10 2005 052 766 B3 eine linear verstellbare, aktive Kopfstütze bekannt. Weiterhin ist aus der Druckschrift DE 697 18 649 T2 eine Kopfstütze für Kraftfahrzeugsitze bekannt, bei der ein Paar von Druckknöpfen zur Betätigung einer Verstelleinrichtung der Kopfstütze von außen her betätigbar sind und jeweils einzeln in der Lage sind, ein Gleitstück zu bewegen.

Der Erfindung liegt die Aufgabe zugrunde, eine Kopfstütze mit einer einfach sowie kompakt aufgebauten und wirkungsvollen Antriebseinrichtung bereitzustellen, die in einer normalen Benutzungssituation eine optimale Bedienbarkeit und einen optimalen Komfort insbesondere einen optimalen Komfort auch während des Verstellvorgangs gewährleistet und in einer Unfallsituation eine optimale Sicherheit für einen Sitzinsassen gewährleistet.

Die Aufgabe wird gelöst durch eine Kopfstütze für einen Fahrzeugsitz, bei welcher zumindest ein dem Kopf des Sitzinsassen zugewandtes erstes Teilstück der Kopfstütze unfallbedingt unter der Wirkung einer Relativbewegung eines im wesentlichen zwischen dem ersten Teilstück und einem dritten Teilstück angeordneten zweiten Teilstücks der Kopfstütze aus einer Gebrauchsstellung zum Kopf des Sitzinsassen hin entlang einer Verlagerungsrichtung in eine Sicherheitsstellung und eine Komfortstellung verlagerbar ist, wobei eine Blockiereinrichtung zur Blockierung oder Verringerung einer Bewegung des ersten Teilstücks der Kopfstütze entgegen der Verlagerungsrichtung vorgesehen ist, wobei die Blockiereinrichtung bezüglich einer in Einbauposition der Kopfstütze im wesentlichen vertikal und parallel zur Verlagerungsrichtung verlaufenden Mittelebene der Kopfstütze asymmetrisch vorgesehen ist und mittels eines bezüglich der Mittelebene symmetrisch anordenbaren Betätigungselements betätigbar vorgesehen ist. Hierdurch wird erfindungsgemäß der Vorteil erzielt, dass das Betätigungselement bei gleicher Bauweise zweier verschiedener Kopfstützen bzw. eines Kopfstützenpaars - d.h. bei relativ zur Mittelebene asymmetrischer Anordnung der verschiedenen die beiden Kopfstützen im Inneren ausmachenden Teilstücke - derart angeordnet sein können, dass im Fall der einen Kopfstütze des Kopfstützenpaares das Betätigungselement auf der linken Seite der Kopfstütze angeordnet ist und dass im Fall der anderen Kopfstütze des Kopfstützenpaares das Betätigungselement auf der rechten Seite der Kopfstütze angeordnet ist. Hierdurch kann die Stückzahl für sämtliche im Inneren der Kopfstützen anzuordnenden und damit wesentlichen Teile verdoppelt und damit der Herstellkosten einer solchermaßen vorgesehenen Kopfstütze reduziert werden. Für den Fall einer erfindungsgemäßen sogenannten aktiven Kopfstütze, d.h. einer Kopfstütze, die einer Vorverlagerung eines zum Kopf eines Sitzinsassen weisenden Kopfstützenteils fähig ist, ist eine solche Funktionsintegration - d.h. eine Verstellbarbeit bei gleichzeitiger symmetrischer Anordnung bzw. Anordenbarkeit der Betätigungselemente bzw. des Betätigungselements eine besondere Herausforderung bei Berücksichtigung der stets geringen Bauraumkapazitäten.

Erfindungsgemäß ist bevorzugt, dass das Betätigungselement als ein Druckbetätigungselement, insbesondere ein Druckknopf, vorgesehen ist. Hierdurch wird eine besonders einfache, benutzerintuitive und hinsichtlich einer Unfallsituation und der Verletzungsgefahr an harten und/oder herausstehenden Teilen der Kopfstütze besonders sichere bzw. verletzungsverhindernde Realisierung geschaffen.

Ferner ist erfindungsgemäß bevorzugt, dass die Blockiereinrichtung wenigstens einen durch das Betätigungselement im Sinne einer Deblockierung der Blockiereinrichtung aktuierbaren Blockierstift aufweist, wobei zur Aktuierung des Blockierstifts insbesondere eine Bewegung des Blockierstifts im wesentlichen entgegen der Verlagerungsrichtung vorgesehen ist und insbesondere der Blockierstift im Normalfall im Sinne einer Blockierung der Blockiereinrichtung federvorbelastet vorgesehen ist. Hierdurch wird ein einfacher und dennoch sicherer Weise eine Blockiermöglichkeit derart geschaffen, dass nach einer Auslösung des Sicherheitsmechanismus der Kopfstütze das erste Teilstück nicht mehr oder zumindest nicht mehr wesentlich zurück in Richtung der Gebrauchsstellung verschoben wird.

Erfindungsgemäß ist weiterhin bevorzugt, dass die Bewegung des Blockierstifts durch das Betätigungselement mittels eines Schrägflächenmechanismus vorgesehen ist. Hierdurch ist in besonders einfacher Weise eine robuste mechanische Verbindung zwischen dem Blockierstift und dem Betätigungselement möglich.

Ferner ist es erfindungsgemäß bevorzugt, dass die Relativbewegung der Teilstücke eine Drehung um eine zur Verlagerungsrichtung im wesentlichen parallele Drehachse ist. Hierdurch wird eine besonders einfache und robuste Verlagerung des ersten Teilstücks in Verlagerungsrichtung möglich.

Weiterhin ist es erfindungsgemäß bevorzugt, dass das erste Teilstück wenigstens eine erste Schrägfläche und das zweite Teilstück wenigstens eine zweite Schrägfläche aufweist bzw. dass das dritte Teilstück wenigstens eine dritte Schrägfläche und das zweite Teilstück wenigstens eine vierte Schrägfläche aufweist, wobei wenigstens ein Teil der Schrägflächen im wesentlichen helixförmig um die Drehachse verlaufen und bei einer Relativbewegung des zweiten Teilstücks um die Drehachse eine Bewegung des ersten bzw. zweiten Teilstücks entlang der Verlagerungsrichtung bewirken. Hierdurch kann zum einen eine besonders wirkungsvolle Umsetzung der rotatorischen Bewegung des zweiten Teilstücks in eine translatorische Bewegung des ersten Teilstücks bewirkt werden und zum anderen kann durch die Bereitstellung von zwei Schrägflächenpaarungen (nämlich zwischen dem ersten Teilstück und dem zweiten Teilstück einerseits und zwischen dem zweiten Teilstück und dem dritten Teilstück andererseits) bei gleichem Drehwinkel der Rotationsbewegung des zweiten Teilstücks eine Vergrößerung der Translationsbewegung des ersten Teilstücks in die Verlagerungsrichtung durch eine gegenläufige Anordnung der Schrägflächenpaarungen bewirkt werden.

Gemäß der vorliegenden Erfindung ist es ferner bevorzugt, dass eine beidseitige Wirkung der ersten und zweiten Schrägflächen und/oder eine beidseitige Wirkung der dritten und vierten Schrägflächen vorgesehen ist. Hierdurch ist es möglich, dass im wesentlichen jeder translatorischen Einstellung des ersten Teilstücks der Kopfstütze eine vergleichsweise gut definierte rotatorische bzw. rotatorische und translatorische Einstellung des zweiten Teilstücks der Kopfstütze entspricht. Insbesondere ist es hierdurch erfindungsgemäß möglich, dass die Kopfstütze in einfacher Weise nach einer Auslösung (d.h. nach der Einstellung der Sicherheitsstellung) wieder zurückgestellt werden kann.

Weiterhin ist es erfindungsgemäß bevorzugt, dass die Blockiereinrichtung eine Verzahnung im Bereich der dritten Schrägfläche und der vierten Schrägfläche aufweist. Hierdurch ist es erfindungsgemäß zum einen möglich, dass trotz der Komforteinstellungsmöglichkeit eine sichere Blockierung der Kopfstütze in der Sicherheitsstellung möglich ist. Zum anderen ist es möglich, dass eine Komforteinstellung der Kopfstütze in horizontaler Richtung - d.h. eine Verschiebung des ersten Teilstücks in Verlagerungsrichtung oder in Gegenrichtung zu Komfortzwecken - in einfacher Weise dadurch möglich ist, dass zur Bewegung der Kopfstütze bzw. des ersten Teilstücks der Kopfstütze entgegen die Verlagerungsrichtung ein Betätigungselement gedrückt wird und dass eine gewünschte Verlagerung der Kopfstütze bzw. des ersten Teilstücks der Kopfstütze in Richtung der Verlagerungsrichtung ohne eine Betätigung eines Betätigungselements eine Verlagerung trotz des Verzahnungseingriffs möglich ist.

Besonders bevorzugt ist es, wenn das zweite Teilstück ein Komfortteilstück und ein Sicherheitsteilstück aufweist, wobei das Komfortteilstück zur Komfortverstellung ausgehend von einer der Gebrauchsstellung des ersten Teilstücks entsprechenden Position von der Position des Sicherheitsteilstücks entfernbar ist, wobei insbesondere die vierte Schrägfläche am Komfortteilstück vorgesehen ist. Hierdurch ist es in einfacher Weise möglich, im wesentlichen beruhend auf den gleichen Mechanismen bzw. beruhend auf den gleichen Teilen der Kopfstütze sowohl eine Komfortverstellung als auch eine Sicherheitsverstellung zu realisieren.

Ferner ist es erfindungsgemäß bevorzugt, dass das Komfortteilstück zur Komfortverstellung bis in eine der Sicherheitsstellung des ersten Teilstücks entsprechenden Position unabhängig von der Position des Sicherheitsteilstücks verstellbar ist. Hierdurch wird in vorteilhafter Weise für den Verstellbereich, der der Komfortverstellung zugänglich ist, der maximale Verstellbereich gewählt, so dass eine solche Kopfstütze besonders hohe Komfortansprüche zu befriedigen in der Lage ist.

Die Figuren stellen beispielhaft und schematisch verschiedene Ausführungen der Erfindung dar.

Es zeigen:
Figur 1 einen Fahrzeugsitz mit einer Kopfstütze,
Figuren 2a bis 2d Schnitte durch eine in die Kopfstütze einsetzbare Antriebseinrichtung in unterschiedlichen Funktionsstellungen,
Figuren 3 bis 8 verschiedene Ausführungsformen bzw. Details der erfindungsgemäßen Kopfstütze.

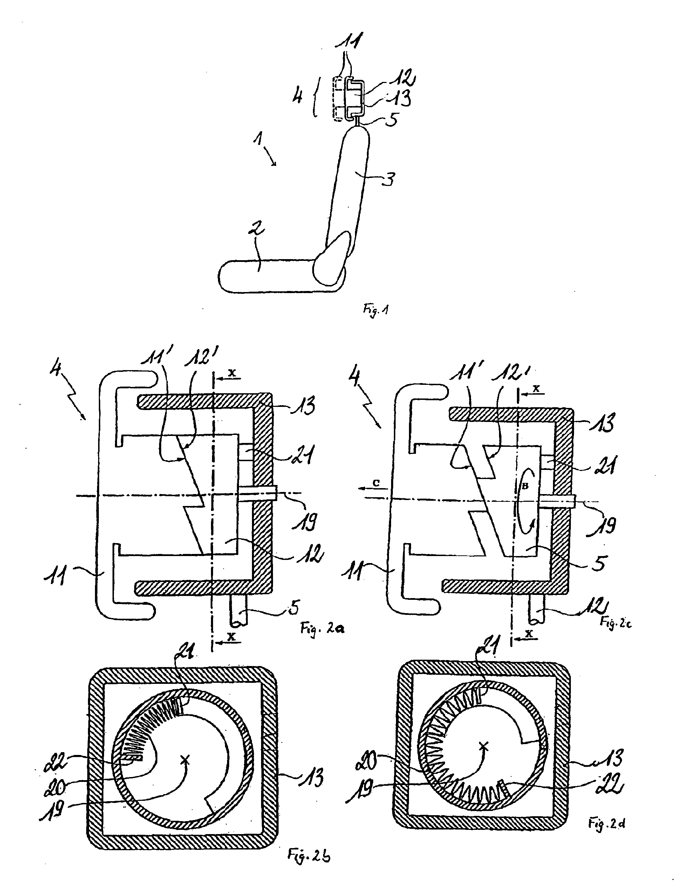

Gemäß der Figur 1 umfasst ein erfindungsgemäßer Fahrzeugsitz 1 bzw. ein mit einer erfindungsgemäßen Kopfstütze 4 ausgestatteter Fahrzeugsitz 1 ein Sitzteil 2 und eine mit diesem insbesondere neigungsverstellbar verbundenen Rückenlehne 3, welche mit der Kopfstütze 4 ausgestattet ist. Paarige Haltestangen 5 können zur Befestigung der Kopfstütze an der Rückenlehne 3 vorgesehen sein. Es können jedoch auch alternativ andere Befestigungsmöglichkeiten (nicht dargestellt) zwischen der Rückenlehne 3 und der Kopfstütze 4 vorgesehen sein. Die paarigen Haltestangen 5 der Kopfstütze 4 können im oberen Bereich der Rückenlehne 3 oder im Bereich der Kopfstütze 4 über ein Gelenk (nicht dargestellt) mit der Rückenlehne 3 bzw. mit der Kopfstütze 4 schwenkbar verbunden sein. Die Kopfstütze 4 weist erfindungsgemäß wenigstens ein dem Kopf des Sitzinsassen zugewandtes erstes Teilstück 11 der Kopfstütze 4 auf, das unfallbedingt unter der Wirkung einer Relativbewegung eines im wesentlichen zwischen dem ersten Teilstück 11 und einem dritten Teilstück 13 angeordneten zweiten Teilstücks 12 der Kopfstütze 4 aus einer Gebrauchsstellung (mit durchgezogener Linie in Figur 1 gezeichnet) zum Kopf des Sitzinsassen hin entlang einer Verlagerungsrichtung in eine Sicherheitsstellung (mit gestrichelter Linie in Figur 1 gezeichnet) verlagerbar ist. Bei dem ersten Teilstück 11 handelt es sich insbesondere um ein Polsterelement, an welches der Kopf des Sitzinsassen angelegt bzw. abgestützt werden kann. Bei dem dritten Teilstück 13 der Kopfstütze 4 handelt es sich insbesondere um einen Grundkörper der Kopfstütze 4, der über die Haltestangen 5 starr oder auch höhen und/oder neigungsverstellbar mit der Rückenlehne 3 verbunden ist. Innerhalb der Kopfstütze 4 ist zwischen dem ersten Teilstück 11 und dem dritten Teilstück 13 eine nachfolgend im Einzelnen beschriebene und das zweite Teilstück 12 aufweisenden Antriebseinrichtung angeordnet, welche die Verlagerung des ersten Teilstücks 11 in einer Bewegungsrichtung C auf den Kopf des Sitzinsassen hin bewirkt.

Gemäß der Figuren 2a bis 2d ist die Relativbewegung der Teilstücke 11, 12, 13 der erfindungsgemäßen Kopfstütze 4 in schematischer Weise näher dargestellt. Hierbei zeigen die Figuren 2a und 2b den Zustand der Kopfstütze in der Gebrauchsstellung und die Figuren 2c und 2d den Zustand der Kopfstütze in der Sicherheitsstellung (Verlagerung des ersten Teilstücks 11 in Richtung auf den Sitzinsassen zu, Bewegungsrichtung C), wobei die Figur 2b eine vordere Schnittdarstellung der in Figur 2a in einer seitlichen Schnittdarstellung abgebildeten Kopfstütze 4 gemäß der Schnittlinie X-X der Figur 2a darstellt und wobei die Figur 2d eine vordere Schnittdarstellung der in Figur 2c in einer seitlichen Schnittdarstellung abgebildeten Kopfstütze 4 gemäß der Schnittlinie X-X der Figur 2c darstellt. Die Antriebseinrichtung umfasst das zweite Teilstück 12 der Kopfstütze 4, das um eine Drehachse 19 drehbar mit dem dritten Teilstück 13 bzw. Grundkörper der Kopfstütze 4 verbunden ist. Eine im Bereich zwischen zwei Angriffspunkten 21 und 22 lediglich schematisch dargestellte vorgespannte Feder 20 ist - je nach Vorspannung - entweder in der Lage, nach Lösung einer nicht dargestellten Verriegelungseinrichtung eine Bewegung von der Gebrauchsstellung in die Sicherheitsstellung zu bewirken oder aber eine Bewegung von der Sicherheitsstellung in die Gebrauchsstellung zu bewirken (falls die Bewegung von der Gebrauchsstellung in die Sicherheitsstellung durch beispielsweise einen Bowdenzug-Antrieb - etwa verknüpft mit dem Auftreten einer durch den Sitzinsassen hervorgerufenen Inertialkraft beispielsweise auf die Rückenlehne des Sitzes - erfolgt). Hierbei kann die Verriegelungseinrichtung beispielsweise durch eine elektromagnetisch aktuierte Halteeinrichtung gelöst werden oder aber es kann die Verriegelung der Vorspannung der Feder durch eine pyrotechnische Einrichtung gelöst werden, etwa durch Absprengen einer Haltenase oder eines Haltebolzens (nicht dargestellt). Bei einem Unfall (Fig. 2c, Fig. 2d) wird das zweite Teilstück 12 gegenüber dem dritten Teilstück 13 verdreht (Pfeil B). Aufeinander reibende Schrägflächen zwischen dem ersten Teilstück 11 und dem zweiten Teilstück 12 und/oder zwischen dem zweiten Teilstück 12 und dem dritten Teilstück 13 bewirken dabei eine axiale Kraft und eine Vorverlagerung des ersten Teilstücks 11 parallel zur Richtung der Drehachse 19 in Richtung des Pfeiles C (Verlagerungsrichtung). Die mit 11' bzw. 12' bezeichneten und zueinander weisenden Stirnflächen des ersten Teilstücks 11 (nachfolgend auch als erste Schrägflächen 11' bezeichnet) bzw. des zweiten Teilstücks 12 (nachfolgend auch als zweite Schrägflächen 12' bezeichnet) sind erfindungsgemäß als Schrägflächen derart ausgebildet, dass die rotative Bewegung des zweiten Teilstücks 12 in eine translative Bewegung des ersten Teilstücks 11 übersetzt wird. Eine Blockiereinrichtung kann erfindungsgemäß an dieser Stelle (d.h. zwischen den ersten und zweiten Schrägflächen 11', 12') derart vorgesehen sein, dass ein Teil oder alle dieser ersten und zweiten Schrägflächen 11', 12' mit - beispielsweise sägezahnartigen - Verzahnungen ausgestattet sind, die eine Blockierung des ersten Teilstücks 11 in seiner ganz oder teilweise gemäß der Bewegungsrichtung C ausgefahrenen Lage ermöglichen, wenn auf das erste Teilstück 11 eine dieses in die Gebrauchsstellung zurückbewegende Kraft (beispielsweise nach oder während eines Unfalls ausgehend von dem Kopf des Fahrzeuginsassen) wirkt. Dritte und vierte Schrägflächen (in den Figuren 2a bis 2d nicht dargestellt) können entweder alternativ oder kumulativ zu ihrer Anordnung zwischen dem ersten Teilstück 11 und dem zweiten Teilstück 12 auch zwischen dem zweiten Teilstück 12 und dem dritten Teilstück 13 vorgesehen sein und alternativ oder kumulativ zu der Blockiereinrichtung im Bereich der ersten und zweiten Schrägflächen 11', 12' eine ähnlich aufgebaute Blockiereinrichtung aufweisen.

Gemäß der vorliegenden Erfindung ist es vorgesehen, dass die Verlagerung des ersten Teilstücks 11 in Verlagerungsrichtung C nicht nur in einer Unfallsituation, sondern auch für Komfortzwecke auf Wunsch eines Benutzers möglich ist. Es ist somit außer der Gebrauchsstellung nicht lediglich die Sicherheitsstellung des ersten Teilstücks 11 möglich, sondern wenigstens eine, bevorzugt jedoch eine Mehrzahl von Komfortstellungen. Hierbei ist es erfindungsgemäß insbesondere vorgesehen, dass die Komfortstellungen gerastert sind, d.h. es gibt kein Kontinuum an Einstellmöglichkeiten (sozusagen unendlich viele Komforteinstellungen), sondern eine begrenzte Zahl von beispielsweise zwischen 5 und 50, bevorzugt etwa 20 bis 30 einstellbaren Komfortstellungen. Erfindungsgemäß kann es hierbei vorgesehen sein, dass sich ausgehend von der Gebrauchsstellung der Verlagerungsweg in Verlagerungsrichtung für Komfortzwecke und der Verlagerungsweg zur Einstellung der Sicherheitsstellung vollständig überlappen oder dass entweder der Verlagerungsweg für Komfortzwecke größer ist als für Sicherheitszwecke oder umgekehrt der Verlagerungsweg für Komfortzwecke kleiner ist als für Sicherheitszwecke. Im nachfolgend ausgeführten Ausführungsbeispiel überlappen sich der Vertagerungsweg in Verlagerungsrichtung für Komfortzwecke und der Verlagerungsweg zur Einstellung der Sicherheitsstellung vollständig. Dies ist kann erfindungsgemäß beispielsweise derart realisiert sein, dass das zweite Teilstück 12 ein Komfortteilstück 122 und ein Sicherheitsteilstück 123 aufweist, wobei mittels einer Drehung des Komfortteilstücks 122 um die Drehachse 19 ausgehend von der Gebrauchsstellung oder ausgehend von einer Komfortstellung eine Bewegung des ersten Teilstücks 11 entlang der Verlagerungsrichtung C vorgesehen ist und wobei mittels einer Drehung des Sicherheitsteilstücks 123 um die Drehachse 19 eine zumindest teilweise Mitbewegung des Komfortteilstücks und eine Bewegung des ersten Teilstücks 11 entlang der Verlagerungsrichtung C vorgesehen ist. Der einfacheren Darstellung wegen ist jedoch in den Figuren 2a bis 2d weder das Sicherheitsteilstück 123 noch das Komfortteilstück 122 einzeln dargestellt.

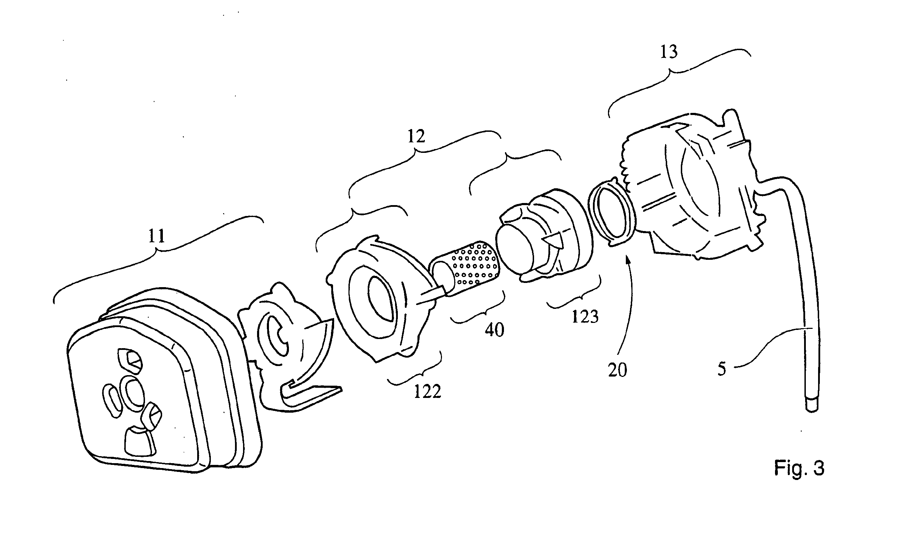

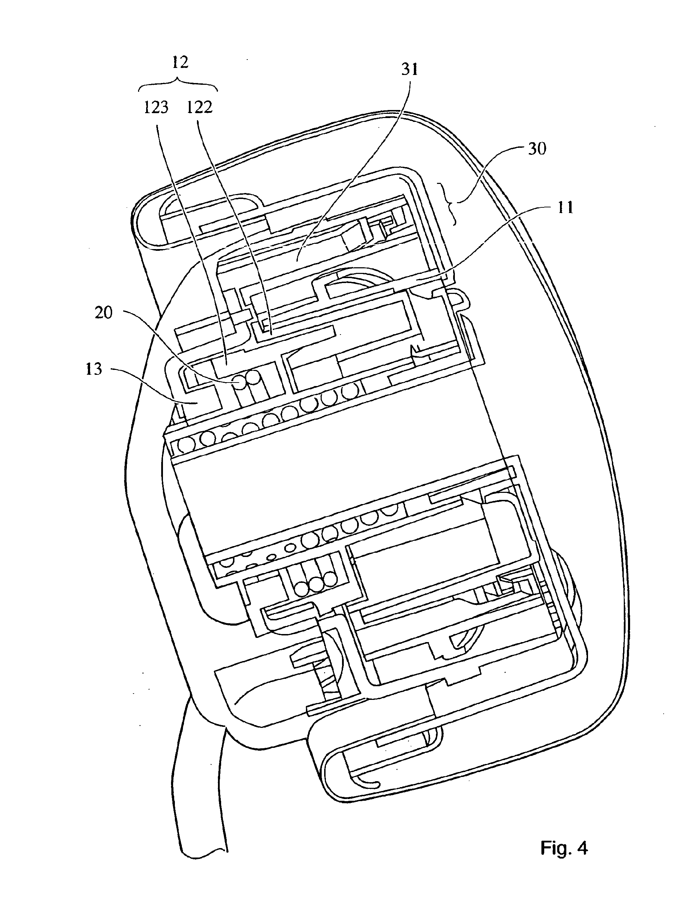

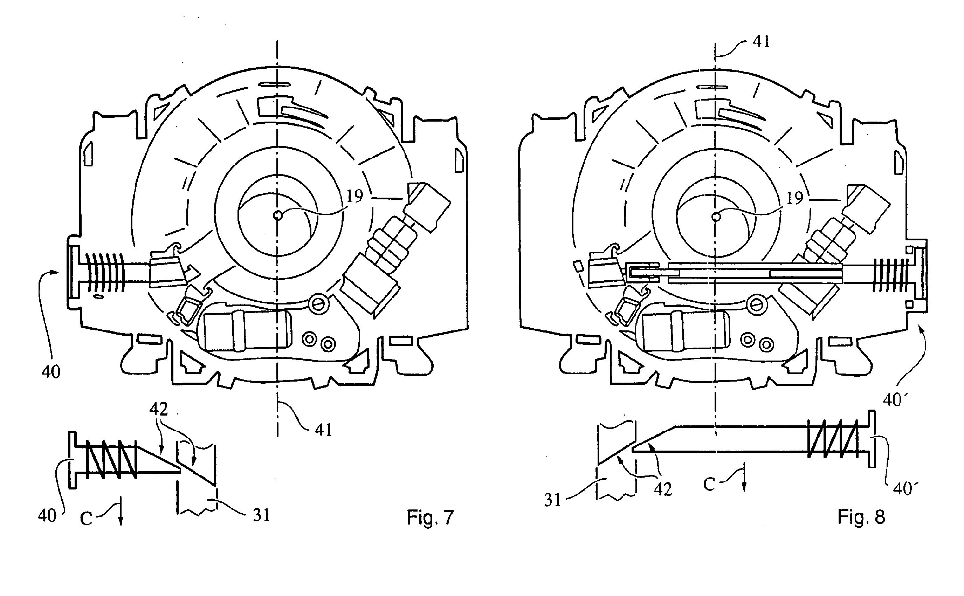

In den Figuren 3 bis 8 sind schematisch verschiedene Darstellungen einer erfindungsgemäßen Kopfstütze 4 dargestellt, wobei in Figur 3 eine Explosionsdarstellung, in den Figuren 4, 5 und 6 jeweils eine Schnittdarstellung und in den Figuren 7 und 8 jeweils Draufsicht auf das dritte Teilstück der Kopfstütze 4 aus einer Richtung in Einbauposition hinten dargestellt sind. Jeweils ist das erste Teilstück 11, das dritte Teilstück 13, die als Schenkelfeder 20 ausgebildete Feder 20, die Haltestangen 5 für die Kopfstütze 4 und das zweite Teilstück 12 mit dem Komfortteilstück 122 und dem Sicherheitsteilstück 123 dargestellt.

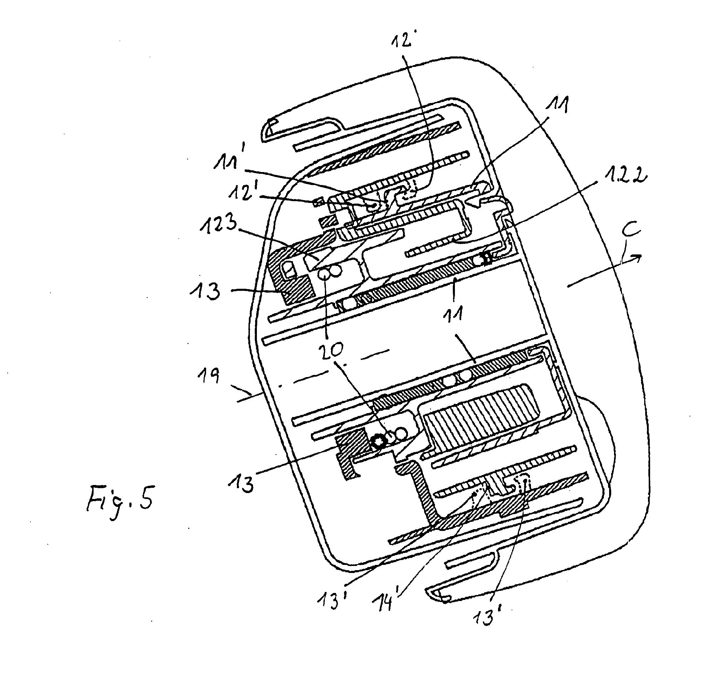

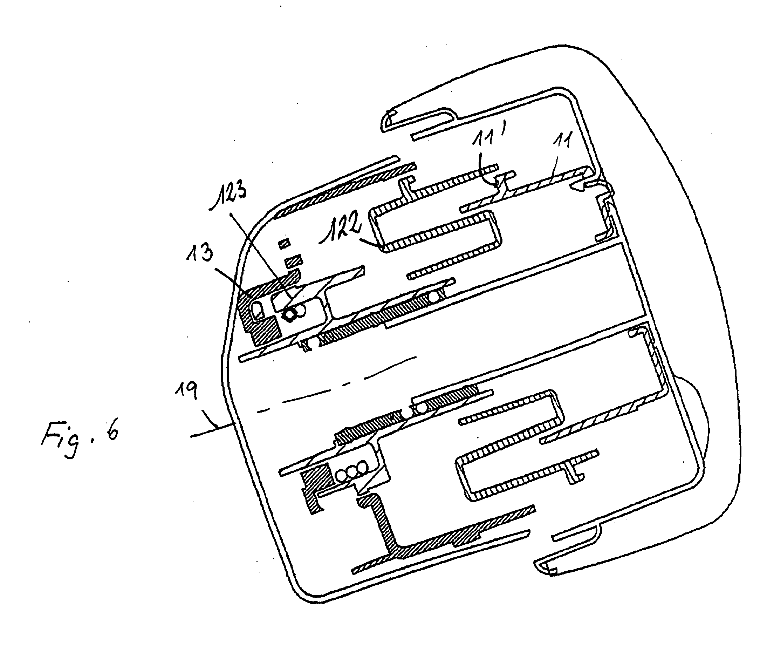

In den Figuren 5 und 6 sind in Schnittdarstellung verschiedene Einstellungen der Kopfstütze 4 bzw. des ersten Teilstücks 11 der Kopfstütze 4 relativ zur restlichen Kopfstütze 4 dargestellt, wobei in Figur 5 die Gebrauchsstellung dargestellt ist, in Figur 6 eine aus Komfortgründen (maximal) ausgefahrene Stellung des ersten Teilstücks 11. Hierbei ist insbesondere aus einem Vergleich der Darstellungen in den Figuren 5 und 6 erkennbar, dass ausgehend von der Gebrauchsstellung bei einer rotativen Bewegung (Gemäß dem Pfeil B) des Komfortteilstücks 122 ein translativer Abstand (in Richtung der Verlagerungsrichtung C) des Komfortteilstücks 122 vom Sicherheitsteilstück 123 einerseits sowie ein translativer Abstand (in Richtung der Verlagerungsrichtung C) des ersten Teilstücks 11 vom Komfortteilstück 122 andererseits herbeigeführt wird (vgl. die Figuren 5 und 6). Dieses Resultat wird durch die Schrägflächen 11'. 12', 13' und 14' erzeugt. Hierbei können ein Teil der Schrägflächen - insbesondere die ersten Schrägflächen 11' und die vierten Schrägflächen 14' - als helixförmige Schrägflächen um den im wesentlichen zylindrischen Verlauf (an der jeweiligen Stelle) des ersten Teilstücks 11 einerseits und des zweiten Teilstücks 12 bzw. des Komfortteilstücks 122 andererseits vorgesehen sein, wobei insbesondere die jeweiligen Gegenflächen, d.h. die den ersten Schrägflächen 11' gegenüberliegenden zweiten Schrägflächen 12' bzw. die den vierten Schrägflächen 14' gegenüberliegenden dritten Schrägflächen 13', lediglich als Gegenlager bzw. Anschlagpunkte ausgeführt, die die jeweiligen Schrägflächen (d.h. die ersten Schrägflächen 11' und die vierten Schrägflächen 14') beidseitig gegen eine Verschiebung entlang der Verlagerungsrichtung C sichern, selbst aber nicht helixförmig ausgebildet sein müssen. Ein Beispiel hierfür ist schematisch in Figur 4 dargestellt, in der auf jeweils lediglich einer Seite der Drehachse 19 die zweiten Schrägflächen 12' und die vierten Schrägflächen 14' in punktierter Darstellung sowohl in Verlagerungsrichtung C oberhalb der ersten Schrägflächen 11' bzw. vierten Schrägflächen 14' als auch in Verlagerungsrichtung C unterhalb der ersten Schrägflächen 11' bzw. vierten Schrägflächen 14' angeordnet dargestellt sind. Die in diesem Ausführungsbeispiel helixförmigen ersten bzw. vierten Schrägflächen 11', 14' sind zwischen den die zweiten bzw. dritten Schrägflächen 12', 13' bildenden Anformungen in Verlagerungsrichtung C gehalten. Hierdurch ist gewährleistet, dass eine vorgegebene relative Drehposition (im vorliegenden Fall zwischen dem ersten Teilstück 11 und dem Komfortteilstück 122 bzw. zwischen dem Komfortteilstück 122 und dem dritten Teilstück 13) mit einer vorgegebenen relativen translativen Position verknüpft ist.

Weiterhin verlaufen insbesondere die ersten Schrägflächen 11' und die vierten Schrägflächen 14' gegenläufig, so dass der Maximalhub des ersten Teilstücks 11 entlang der Verlagerungsrichtung C bei vergleichsweise kompaktem Aufbau der Kopfstütze 4 in Richtung dieser Verlagerungsrichtung C möglichst maximal ist.

Eine über einen Totgang hinausgehende Bewegung des ersten Teilstücks 11 entgegen der Verlagerungsrichtung C wird aufgrund einer nicht dargestellten Blockiereinrichtung 30 in Form einer Verzahnung im Bereich der dritten und vierten Schrägflächen 13', 14' verhindert. Hierzu ist zumindest eine Paarung aus helixförmiger Schrägfläche und nicht helixförmiger Schrägfläche gezahnt vorgesehen, d.h. von beispielsweise drei über den Umfang verteilten Schrägflächen ist lediglich eine gezahnt vorgesehen. Im Ausführungsbeispiel (vgl. Figur 4) ist ferner vorgesehen, dass die gezahnte Fläche beispielsweise der dritten Schrägfläche 13' beispielsweise mittels eines ggf. federvorbelasteten Blockierstifts 31 von dem im Normalfall vorgesehenen Zahneingriff mit der vierten Schrägfläche 14 abgehoben werden kann und damit die Blockierwirkung der Blockiereinrichtung 30 aufgehoben werden kann. Hierdurch ist es - insbesondere für den Fall der Komforteinstellung, d.h. bei verriegelter Feder 20 - möglich, durch manuelle Betätigung des Blockierstifts 31 und durch Drücken auf das erste Teilstück 11 eine Verstellung des ersten Teilstücks 11 entgegen der Verlagerungsrichtung C zu erzielen.

Die manuelle Verstellung des ersten Teilstücks 11 über eine Betätigung des Blockierstifts 31 ist erfindungsgemäß mittels eines symmetrisch anordenbaren Betätigungselements 40 ,40' möglich. Dieser Sachverhalt ist in den Figuren 7 und 8 dargestellt. In Figur 7 und 8 ist jeweils eine Draufsicht auf das dritte Teilstück 13 der Kopfstütze 4 aus einer Richtung in Einbauposition von hinten dargestellt. Dies bedeutet, dass das Betätigungselement 40 in Figur 7 auf der linken Seite einer im wesentlichen vertikalen und im wesentlichen parallel zur Drehachse 19 verlaufenden Mittelebene 41 angeordnet ist und dass das Betätigungselement 40' in Figur 8 auf der rechten Seite der Mittelebene 41 angeordnet ist. Hierdurch kann die Betätigung des Blockierstifts 31 mittels der Betätigungselemente 40, 40' in symmetrischer Weise erfolgen, obwohl der Blockierstift 31 unsymmetrisch bezüglich der Mittelebene 41 angeordnet ist und obwohl im wesentlichen das gesamte Innere der Kopfstütze 4 zu großen Teilen unsymmetrisch bezüglich der Mittelebene 41 ausgebildet ist. Ein Paar von Kopfstützen, die beispielsweise in einem Fahrzeug an zwei benachbarte Sitze einer Sitzreihe anzubringen sind, können dann erfindungsgemäß in einfacher Weise derart ausgebildet sein, dass die Kopfstützen bzw. deren wesentliche innere Teile zwar unsymmetrisch zur Mittelebene 41 ausgebildet sind aber dennoch entweder beide Betätigungselemente 40, 40' (symmetrisch) an jeder Kopfstütze angeordnet vorgesehen sind oder aber nur das linke Betätigungselement 40 an der linken Kopfstütze und nur das rechte Betätigungselement 40' an der rechten Kopfstütze (oder umgekehrt) angeordnet ist, d.h. eine symmetrische Anordenbarkeit vorliegt. Zur Betätigung bzw. Bewegung des Blockierstifts 31 (zur Aufhebung der Blockierung im wesentlichen entgegen der Verlagerungsrichtung C) ist in bevorzugter Weise vorgesehen, dass ein in Figur 7 und 8 schematisch jeweils im unteren Teil der Figuren dargestellter Schrägflächenmechanismus 42 derart angeordnet ist, dass eine von einem der Betätigungselemente 40, 40' durchgeführte (Druck-)Bewegung in Richtung auf die Mittelebene 41 zu zu der Bewegung des Blockierstifts 31 führt.

### Bezugszeichenliste

- 1: Fahrzeugsitz
- 2: Sitzteil
- 3: Rückenlehne
- 4: Kopfstütze
- 5: Haltestange
- 11: erstes Teilstück der Kopfstütze
- 11': erste Schrägfläche
- 12: zweites Teilstück der Kopfstütze
- 12': zweite Schrägfläche
- 13: drittes Teilstück der Kopfstütze
- 13': dritte Schrägfläche
- 14': vierte Schrägfläche
- 19: Drehachse
- 20: Schenkelfeder
- 21, 22: Angriffspunkte
- 30: Blockiereinrichtung
- 31: Blockierstift
- 40, 40': Betätigungselement
- 41: Mittelebene
- 42: Schrägflächenmechanismus
- 122: Komfortteilstück
- 123: Sicherheitsteilstück
- Pfeil B: Drehrichtung des Hohlzylinders
- Pfeil C: Verschiebung / Verlagerung des Polsterkörpers

## Patentansprüche

1. Kopfstütze (4) für einen Fahrzeugsitz (1), bei welcher zumindest ein dem Kopf des Sitzinsassen zugewandtes erstes Teilstück (11) der Kopfstütze unfallbedingt unter der Wirkung einer Relativbewegung eines im wesentlichen zwischen dem ersten Teilstück (11) und einem dritten Teilstück (13) angeordneten zweiten Teilstücks (12) der Kopfstütze aus einer Gebrauchsstellung zum Kopf des Sitzinsassen hin entlang einer Verlagerungsrichtung (C) in eine Sicherheitsstellung und eine Komfortstellung verlagerbar ist, **dadurch gekennzeichnet, dass** eine Blockiereinrichtung (30) zur Blockierung oder Verringerung einer Bewegung des ersten Teilstücks (11) der Kopfstütze entgegen der Verlagerungsrichtung (C) vorgesehen ist, wobei die Blockiereinrichtung (30) bezüglich einer in Einbauposition der Kopfstütze (4) im wesentlichen vertikal und parallel zur Verlagerungsrichtung verlaufenden Mittelebene (41) der Kopfstütze (4) asymmetrisch vorgesehen ist und mittels eines bezüglich der Mittelebene symmetrisch anordenbaren Betätigungselements (40, 40') betätigbar vorgesehen ist.

2. Kopfstütze nach Anspruch 1, **dadurch gekennzeichnet, dass** das Betätigungselement (40, 40') als ein Druckbetätigungselement, insbesondere ein Druckknopf, vorgesehen ist.

3. Kopfstütze nach einem der vorhergehenden Ansprüche, **dadurch gekennzeichnet, dass** die Blockiereinrichtung (30) wenigstens einen durch das Betätigungselement (40, 40') im Sinne einer Deblockierung der Blockiereinrichtung (40, 40') aktuierbaren Blockierstift (31) aufweist, wobei zur Aktuierung des Blockierstifts (31) insbesondere eine Bewegung des Blockierstifts (31) im wesentlichen entgegen der Verlagerungsrichtung (C) vorgesehen ist.

4. Kopfstütze nach einem der vorhergehenden Ansprüche, **dadurch gekennzeichnet, dass** die Bewegung des Blockierstifts (31) durch das Betätigungselement (40, 40') mittels eines Schrägflächenmechanismus (42) vorgesehen ist.

5. Kopfstütze nach einem der vorhergehenden Ansprüche, **dadurch gekennzeichnet, dass** der Blockierstift (31) im Normalfall im Sinne einer Blockierung der Blockiereinrichtung (30) federvorbelastet vorgesehen ist.

6. Kopfstütze nach einem der vorhergehenden Ansprüche, **dadurch gekennzeichnet, dass** die Relativbewegung der Teilstücke (11, 12, 13) eine Drehung um eine zur Verlagerungsrichtung (C) im wesentlichen parallele Drehachse (19) ist.

7. Kopfstütze nach einem der vorhergehenden Ansprüche, **dadurch gekennzeichnet, dass** das erste Teilstück (11) wenigstens eine erste Schrägfläche (11') und das zweite Teilstück (12) wenigstens eine zweite Schrägfläche (12') aufweist, wobei die ersten und/oder zweiten Schrägflächen (11', 12') im wesentlichen helixförmig um die Drehachse (19) verlaufen und bei einer Relativbewegung des zweiten Teilstücks (12) um die Drehachse (19) eine Bewegung des ersten Teilstücks (11) entlang der Verlagerungsrichtung (C) bewirken.

8. Kopfstütze nach einem der vorhergehenden Ansprüche, **dadurch gekennzeichnet, dass** das dritte Teilstück (13) wenigstens eine dritte Schrägfläche (13') und das zweite Teilstück (12) wenigstens eine vierte Schrägfläche (14') aufweist, wobei die dritten und/oder vierten Schrägflächen (13', 14') im wesentlichen helixförmig um die Drehachse (19) verlaufen und bei einer Relativbewegung des zweiten Teilstücks (12) um die Drehachse (19) eine Bewegung des zweiten Teilstücks (12) entlang der Verlagerungsrichtung (C) bewirken.

9. Kopfstütze nach einem der vorhergehenden Ansprüche, **dadurch gekennzeichnet, dass** eine beidseitige Wirkung der ersten und zweiten Schrägflächen (11', 12') und/oder eine beidseitige Wirkung der dritten und vierten Schrägflächen (13', 14') vorgesehen ist.

10. Kopfstütze nach einem der vorhergehenden Ansprüche, **dadurch gekennzeichnet, dass** die Blockiereinrichtung (30) eine Verzahnung im Bereich der dritten Schrägfläche (13') und der vierten Schrägfläche (14') aufweist.

11. Kopfstütze nach einem der vorhergehenden Ansprüche, **dadurch gekennzeichnet, dass** das zweite Teilstück (12) ein Komfortteilstück (122) und ein Sicherheitsteilstück (123) aufweist, wobei das Komfortteilstück (122) zur Komfortverstellung ausgehend von einer der Gebrauchsstellung des ersten Teilstücks (11) entsprechenden Position von der Position des Sicherheitsteilstücks (123) entfernbar ist, wobei insbesondere die vierte Schrägfläche (14') am Komfortteilstück (122) vorgesehen ist.

12. Kopfstütze nach einem der vorhergehenden Ansprüche, **dadurch gekennzeichnet, dass** das Komfortteilstück (122) zur Komfortverstellung bis in eine der Sicherheitsstellung des ersten Teilstücks (11) entsprechenden Position unabhängig von der Position des Sicherheitsteilstücks (123) verstellbar ist.

## Claims

1. Headrest (4) for a vehicle seat (1) in which, in the event of an accident, at least one first section (11) of the headrest that is oriented towards the head of the seat occupant may be displaced, due to the effect of a relative displacement of a second section (12) of the headrest that is arranged substantially between the first section (11) and a third section (13) from a working position into a safety position and a comfort position in the direction of the head of the seat occupant, in a direction of displacement (C), **characterized in that** a blocking device (30) for blocking or minimizing displacement of the first section (11) of the headrest counter to the direction of displacement (C) is provided, the blocking device (30) being provided to be asymmetrical in relation to a central plane (41) of the headrest (4) extending substantially in a vertical and parallel manner in relation to the direction of displacement in the built-in position of the headrest (4) and being provided able to be actuated by means of an actuation element (40, 40') which is able to be arranged symmetrically in relation to the central plane.

2. Headrest according to Claim 1, **characterized in that** the actuation element (40, 40') is provided as a pressure actuation element, in particular a push button.

3. Headrest according to one of the preceding claims, **characterized in that** the blocking device (30) has at least one blocking pin (31) which may be actuated by the actuation element (40, 40') for the purpose of unblocking the blocking device (30), for actuating the blocking pin (31) in particular a movement of the blocking pin (31) being provided substantially counter to the direction of displacement (C).

4. Headrest according to one of the preceding claims, **characterized in that** the movement of the blocking pin (31) is provided by the actuation element (40, 40') by means of an oblique surface mechanism (42).

5. Headrest according to one of the preceding claims, **characterized in that** the blocking pin (31) in the normal case is provided pretensioned by a spring for the purpose of blocking the blocking device (30).

6. Headrest according to one of the preceding claims, **characterized in that** the relative movement of the sections (11, 12, 13) is a rotation about a rotational axis (19) substantially parallel to the direction of displacement (C).

7. Headrest according to one of the preceding claims, **characterized in that** the first section (11) has at least one first oblique surface (11') and the second section (12) has at least one second oblique surface (12'), the first and/or second oblique surfaces (11', 12') extending substantially helically about the rotational axis (19) and with a relative movement of the second section (12) about the rotational axis (19) effect a movement of the first section (11) in the direction of displacement (C).

8. Headrest according to one of the preceding claims, **characterized in that** the third section (13) has at least one third oblique surface (13') and the second section (12) has at least one fourth oblique surface (14'), the third and/or fourth oblique surfaces (13', 14') extending substantially helically about the rotational axis (19) and with a relative movement of the second section (12) about the rotational axis (19) effect a movement of the second section (12) in the direction of displacement (C).

9. Headrest according to one of the preceding claims, **characterized in that** the first and second oblique surfaces (11', 12') act on both sides and/or the third and fourth oblique surfaces (13', 14') act on both sides.

10. Headrest according to one of the preceding claims, **characterized in that** the blocking device (30) has teeth in the region of the third oblique surface (13') and the fourth oblique surface (14').

11. Headrest according to one of the preceding claims, **characterized in that** the second section (12) has a comfort section (122) and a safety section (123), the comfort section (122) being able to be moved away from the position of the safety section (123), for adjusting the comfort, starting from a position corresponding to the working position of the first section (11), in particular the fourth oblique surface (14') being provided on the comfort section (122).

12. Headrest according to one of the preceding claims, **characterized in that** the comfort section (122) may be adjusted, for adjusting the comfort, into a position corresponding to the safety position of the first section (11) independently of the position of the safety section (123).

## Revendications

1. Appuie-tête (4) pour un siège de véhicule (1), dans lequel au moins une première pièce partielle (11) de l'appuie-tête tournée vers la tête de l'occupant du siège peut se déplacer en cas de collision sous l'effet d'un mouvement relatif d'une deuxième pièce partielle (12) de l'appuie-tête disposée essentiellement entre la première pièce partielle (11) et une troisième pièce partielle (13) d'une position d'utilisation vers la tête de l'occupant du siège le long d'une direction de déplacement (C) dans une position de sécurité et une position de confort, **caractérisé en ce qu'**il est prévu un dispositif de blocage (30) pour le blocage ou la réduction d'un mouvement de la première pièce partielle (11) de l'appuie-tête à l'inverse de la direction de déplacement (C), dans lequel le dispositif de blocage (30) est prévu sous forme asymétrique par rapport à un plan médian (41) de l'appuie-tête (4) s'étendant essentiellement en direction verticale et parallèle à la direction de déplacement dans la position de montage de l'appuie-tête (4) et il est prévu pour être actionnable au moyen d'un élément d'actionnement (40, 40') pouvant être disposé de façon symétrique par rapport au plan médian.

2. Appuie-tête selon la revendication 1, **caractérisé en ce que** l'élément d'actionnement (40, 40') est prévu sous la forme d'un élément d'actionnement par pression, en particulier un bouton-poussoir.

3. Appuie-tête selon l'une quelconque des revendications précédentes, **caractérisé en ce que** le dispositif de blocage (30) présente au moins une tige de blocage (31) actionnable par l'élément d'actionnement (40, 40') dans le sens d'un déblocage du dispositif de blocage (30), dans lequel il est prévu, pour l'actionnement de la tige de blocage (31), en particulier un mouvement de la tige de blocage (31) essentiellement en sens inverse de la direction de déplacement (C).

4. Appuie-tête selon l'une quelconque des revendications précédentes, **caractérisé en ce que** le mouvement de la tige de blocage (31) par l'élément d'actionnement (40, 40') est prévu au moyen d'un mécanisme à faces obliques (42).

5. Appuie-tête selon l'une quelconque des revendications précédentes, **caractérisé en ce que** la tige de blocage (31) est prévue dans le cas normal avec une charge de ressort initiale dans le sens d'un blocage du dispositif de blocage (30).

6. Appuie-tête selon l'une quelconque des revendications précédentes, **caractérisé en ce que** le mouvement relatif des pièces partielles (11, 12, 13) est une rotation autour d'un axe de rotation (19) essentiellement parallèle à la direction de déplacement (C).

7. Appuie-tête selon l'une quelconque des revendications précédentes, **caractérisé en ce que** la première pièce partielle (11) présente au moins une première face oblique (11') et la deuxième pièce partielle (12) présente au moins une deuxième face oblique (12'), dans lequel les premières et/ou les deuxièmes faces obliques (11', 12') s'étendent essentiellement en forme d'hélice autour de l'axe de rotation (19) et provoquent un mouvement de la première pièce partielle (11) le long de la direction de déplacement (C) lors d'un mouvement relatif de la deuxième pièce partielle (12) autour de l'axe de rotation (19).

8. Appuie-tête selon l'une quelconque des revendications précédentes, **caractérisé en ce que** la troisième pièce partielle (13) présente au moins une troisième face oblique (13') et la deuxième pièce partielle (12) présente au moins une quatrième face oblique (14'), dans lequel les troisièmes et/ou les quatrièmes faces obliques (13', 14') s'étendent essentiellement en forme d'hélice autour de l'axe de rotation (19) et provoquent un mouvement de la deuxième pièce partielle (12) le long de la direction de déplacement (C) lors d'un mouvement relatif de la deuxième pièce partielle (12) autour de l'axe de rotation (19).

9. Appuie-tête selon l'une quelconque des revendications précédentes, **caractérisé en ce qu'**il est prévu un effet bilatéral des premières et deuxièmes faces obliques (11', 12') et/ou un effet bilatéral des troisièmes et quatrièmes faces obliques (13', 14').

10. Appuie-tête selon l'une quelconque des revendications précédentes, **caractérisé en ce que** le dispositif de blocage (30) présente une denture dans la région de la troisième face oblique (13') et de la quatrième face oblique (14').

11. Appuie-tête selon l'une quelconque des revendications précédentes, **caractérisé en ce que** la deuxième pièce partielle (12) présente une pièce partielle de confort (122) et une pièce partielle de sécurité (123), dans lequel la pièce partielle de confort (122) peut, pour le réglage du confort, être écartée de la position de la pièce partielle de sécurité (123) en partant d'une position correspondant à la position d'utilisation de la première pièce partielle (11), dans lequel la quatrième face oblique (14') est prévue en particulier sur la pièce partielle de confort (122).

12. Appuie-tête selon l'une quelconque des revendications précédentes, **caractérisé en ce que** la pièce partielle de confort (122) peut, pour le réglage du confort, être déplacée jusque dans une position correspondant à la position de sécurité de la première pièce partielle (11), indépendamment de la position de la pièce partielle de sécurité (123).
